# EUROPEAN PATENT SPECIFICATION

(11) **EP 4 323 613 B1**
(45) Date of publication and mention of the grant of the patent: **13.08.2025**
(21) Application number: 22721723.9
(22) Date of filing: 08.04.2022
(51) Int. Cl.: E06B 3/22

(54) **A BUILDING APERTURE WINDOW COMPRISING WOOD FIBRE INSULATION**
EIN GEBÄUDEÖFFNUNGSFENSTER MIT HOLZFASERISOLIERUNG
UNE FENÊTRE D'OUVERTURE DE BÂTIMENT COMPRENANT UNE ISOLATION EN FIBRES DE BOIS

(30) Priority: 12.04.2021 DK PA202170168
(43) Date of publication of application: 21.02.2024
(73) Proprietor: VKR Holding A/S, 2970 Hørsholm (DK)
(72) Inventor: JOHNSEN, Simon, 2970 Hørsholm (DK); ANDERSEN, Søren Vejling, 2970 Hørsholm (DK)
(74) Representative: Høiberg P/S
(86) International application number: PCT/EP2022/059398
(87) International publication number: WO 2022/218847

(56) References cited:
- CH-A- 397 210
- CH-A5- 645 156
- DE-C2- 3 507 640

## Description

The present disclosure relates to a building aperture window comprising a hollow profile of polymer material frame, and a wood fibre insulation material insulation placed in a cavity of the hollow profile. The disclosure additionally relates to a method of filling a cavity of one or more building aperture window frame profiles with a natural fibre insulation material.

### Background

Manufacturing of windows for buildings has been the subject of development over many years where one of the major development goals has been to increase the insulation properties of the window. This has among others been achieved by developing window panes with improved heat insulation properties by e.g. providing panes comprising multiple glass sheets spaced apart by insulating gaps, such as gaps comprising an inert gas. Other solutions comprise providing a vacuum insulated glass unit where one or more evacuated gaps are placed between glass sheets of the pane. Additionally, the window frame has been subject to development in order to increase the insulation properties of the frame. Frame profiles with various insulating cavities inside the frame profile, separated by partition walls, have been developed in order to increase the heat insulating properties of the frame. Additionally, also different kinds of insulation material have been provided into such gaps in order to enhance the heat insulation properties of the frame further.

The above solutions together provides windows for buildings that performs well with regard to heat insulation.

The German utility model DE 20110304 U1 discloses use of various insulation materials such as cellulose, cotton, flax, or hemp fibres in the frame of a window. Patent documents EP3575537, DE 20110304 U1 and DE 102014011086 A1 discloses frame solutions comprising insulation.

The present disclosure provides a solution that may help providing a more environmental friendly window for a building aperture that also provides a good heat insulation. For example, the present disclosure provides a solution that may provide advantages in relation to recycling when the window should be scrapped and/or a solution that may help to reduce the total carbon footprint (CO₂ eq/kg) of the window.

CH397210A discloses a building aperture window. CH645156A5 discloses a method of filling a cavity of one or more building aperture window frame hollow profiles with a insulation material by means of a filling system.

### Summary

Some materials for window production may provide an undesirable high CO₂ footprint during manufacturing of the window. The present inventors have found that the insulation material used in the frame of windows for buildings may result in a rather significant impact on the amount of the total CO₂ footprint of the window during the overall life cycle of the window. Different insulation materials that are based on natural fibres exists and have been suggested to be used for insulation material in a profile cavity of a window frame. Among these are e.g. cellulose fibres or cotton, and also other types of insulation material based on natural fibres. However, the present inventors have found that a large amount of such materials may, even though they are based on natural fibres, suffer from providing a larger carbon footprint (CO₂ eq/kg), e.g. due to the manufacturing method, as these may need to be subjected to a significant amount of energy consuming processing to obtain the final insulation product. The cultivation, manufacturing process and transport may even release a significant amount of CO₂.

The present inventors have discovered that some fibre insulation material that comprises wood fibres provides a reduced carbon footprint (CO₂ eq/kg), e.g. since such material may require a reduced degree of energy consuming processing to achieve a condition suitable for window frame insulation, and moreover in that such wood fibre material stores CO₂. Additionally, the inventors have found that such wood fibre insulation material may provide a low thermal conductivity coefficient (λ) when arranged inside a cavity of a frame of a window, in a cost efficient way.

The inventors have found that wood fibre insulation material may be provided into an interior cavity of a window frame, and that this insulation material helps to provide an insulation performance of the window at least on the line with conventionally used insulation materials (such as foamed polymers) arranged in a frame of a window of the same type, so that the overall heat insulation capability of the window (U_{window}) may be maintained or even enhanced.

The present disclosure hence relates to a building aperture window, such as a roof window or a vertical window. The window comprises an insulated glass unit arranged in a frame. The frame comprises one or more hollow profiles comprising walls of a polymer material, and the one or more hollow profiles comprises one or more cavities with a wood fibre insulation material. In one or more further aspects of the present disclosure, the wood fibre insulation material in the one or more cavities has a thermal conductivity coefficient (λᵢₘ) below 0.06 W/(m·K), such as below 0.05 W/(m·K), such as below 0.04 W/(m·K). The wood fibre insulation material may comprise at least 10 wt% lignin, and said polymer material is selected from one or more of CPVC (Chlorinated polyvinyl chloride), PVC (Polyvinyl chloride) and/or PP (polypropylene).

The inventors have found that wood fibre insulation materials may be adapted to be placed in a cavity in a hollow window profile and have a low thermal conductivity coefficient in the cavity. Thereby, the wood insulation material may perform sufficiently with respect to contributing to a sufficiently low U_{frame} value of the window. Hence, the solution according to the present disclosure provides an environmentally friendly solution that provides a low carbon foot print without compromising the insulation performance of the frame.

The inventors have seen indications that wood fibre insulation material may provide a lower carbon footprint when compared to other insulation materials used in frames of windows. Wood fibre insulation material stores CO₂ and may be available locally and/or may require less transport and processing. The wood fibre insulation material may even be considered more advantageous from e.g. a carbon footprint point of view when compared to many other natural fibre insulation materials.

The wood fibre insulation material may additionally need less pre-processing than e.g. cellulose insulation material, which may also make the wood fibre insulation material more environmentally friendly.

A further benefit of using wood fibre insulation material may be that the wood fibre insulation material and other parts of the frame may be easier to reuse/recycle at the end of the lifetime of the window than a large amount of conventional insulation solutions for windows. At least a large part, such as substantially all of the wood fibre insulation material, may be more easy to remove from the remaining part of the frame profile, hence providing a higher yield of window residues more suitable for efficient recycling.

The inventors have seen indications that the wood fibre insulation material may have a CO₂ footprint below 0.4 CO₂ eq/kg (Carbon dioxide (CO₂) equivalent) such as below 0.3 CO₂ eq/kg.

The lambda value/ thermal conductivity coefficient may in aspects of the present disclosure at least be provided at, and determined at, about 23°C and at a relative humidity of about 50%, also denoted λᵢₘ.

The lambda value/ thermal conductivity coefficient may be a declared and/or rated value that may e.g. be determined according to standards and/or methods for defining/determining thermal conductivity of the wood insulation material. E.g., in one or more aspects of the present disclosure, the wood fibre insulation material may be determined to have a declared thermal conductivity that may e.g. be determined according to a standard, such as DS EN 12667:2001 and/or according to a technical assessment such as an ETA (European Technical Assessment).

The wood fibre insulation material may in embodiments of the present disclosure be obtained by means of a manufacturing process comprising mechanical shredding and/or grinding and/or sawing process.

In one or more aspects of the present disclosure, the wood fibre insulation material in the one or more cavities may have a density below 100 kg/m³, such as below 80 kg/m³, such as below 60kg/m³. This may help to contribute in obtaining the low thermal conductivity coefficient of the wood fibre insulation material.

In one or more aspects of the present disclosure, the above mentioned thermal conductivity coefficient of the wood fibre insulation material in the profile cavity may apply with a density of the wood fibre insulation material below 100 kg/m³, such as 80 kg/m³, such as below 60kg/m³. In one or more aspects of the present disclosure, the above mentioned lambda value may apply with a density above 15 kg/m³, such as 20 kg/m³, such as above 30 kg/m³.

In one or more aspects of the present disclosure, the wood fibre insulation material in the one or more cavities has a density, between 15 kg/m³ and 100 kg/m³, such as between 20 kg/m³ and 80 kg/m³ , such as between 30 kg/m³ and 60 kg/m³ or between 20 kg/m³ and 60 kg/m³ (both endpoints included).

In one or more aspects of the present disclosure, the one or more cavities comprising the wood fibre insulation material is/are elongated and extends in the longitudinal direction of the respective hollow profile between opposing walls (e.g. also abutting or the side walls) enclosing the respective cavity.

In one or more aspects of the present disclosure, the walls of the respective profile may surround the cavity along the longitudinal direction of the profiles at all sides of the wood fibre insulation material. The profile walls may substantially completely encloses and shape the cavity at least in the longitudinal direction of the respective frame profile.

In one or more aspects of the present disclosure, inner wall surfaces of said walls may provide said cavity, wherein the cavity has a cross sectional shape of a polygon.

In one or more aspects of the present disclosure, the wood fibre insulation material comprises loose wood fibres, such as substantially consists of loose wood fibres.

This may help to provide a solution where the wood fibre insulation material is more "pure" than e.g. wood fibre insulation material made from bonded wood fibres, e.g. provided in batches that have a desired density. The bonding of the wood fibres may however often be provided by means of e.g. a polymer based material, but this may increase the CO₂ footprint/carbon footprint. By using loose wood fibres that are not bonded to each other as such, although they may be mixed, this may help to reduce the carbon footprint of the window as such.

It is understood that some of the loose fibres may be bundled, but it is understood that substantially no compound, such as less than 0.5% binding material such as polymer binding material may be added with the purpose of providing further binding between the wood components comprising the wood fibres.

In some embodiments of the present disclosure, the wood fibre insulation material may comprise an added polymer such as PET or polyamide. This polymer may help to bind the wood fines together. This added polymer may in further embodiments however be omitted.

In one or more aspects of the present disclosure, the wood fibre insulation material may comprise less than 1 wt% added polymer material, such as less than 0.1 wt% added polymer material. This may e.g. enhance the options of recycling and/or help to reduce carbon footprint of the window.

**In** one or more aspects of the present disclosure, the wood fibre insulation material is unfastened to the walls of the profile facing the cavity. This may e.g. help to ease insertion and removal of the wood fibre insulation material.

**In** one or more aspects of the present disclosure, the wood fibre insulation material is treated with fire retardant compound and/or anti-fungus compound(s).

The anti-fungus compound may be considered as biological protection compound. The fire retardant and/or anti-fungus compound may be selected among environmental friendly compounds.

Wood fibre insulation material may be considered rather structurally stable insulation solution that may e.g. collapse less over time in the cavity, However, if fungus evolves at the insulation material, this may reduce the structural stability of the insulation. Anti-fungus compounds may help to avoid or reduce this, and help to maintain a more structurally stable solution which may be especially relevant when providing insulation into smaller cavities such as cavities of a window frame profile.

**In** one or more aspects of the present disclosure, the wood fibre insulation material comprises less than 30 wt%, such as less than 20 wt%, such as less than 10 wt%, for example less than 5 wt%, such as less than 3 wt%, or such as less than 1 wt% of said fire retardant compound and/or said anti-fungus compound(s).

**In** one or more aspects of the present disclosure, the wood fibre insulation material does not comprise fire retardant compound(s) and/or said anti-fungus compound(s).

The anti-fungus chemicals may be considered as biological protection chemicals. The fire retardant and/or anti-fungus chemical may be selected among environmental friendly compounds.

In one or more aspects of the present disclosure, the wood fibre insulation material comprises at least 1 wt%, such as at least 5 wt%, preferably at least 15 wt% of said fire retardant compound and/or said anti-fungus compound(s).

In one or more aspects of the present disclosure, the one or more hollow profiles comprising said wood fibre insulation material has a U_{frame} value below 1 W/(m²·K), such as below 0.7 W/(m²·K), such as below 0.6 W/(m²·K). Hereby good window performance can be achieved with reduced CO₂ footprint.

In one or more aspects of the present disclosure, the wood fibre insulation material comprises at least 96 wt%, such as at least 99 wt%, for example at least 99.9 wt% wood fibre material. This wood fibre insulation material may include the fire retardant compound and/or said anti-fungus compound(s).

In one or more aspects of the present disclosure, the wood fibre insulation material comprises at least 10 wt% lignin, such as at least 15 wt% lignin, for example at least 20 wt% lignin.

In one or more aspects of the present disclosure, the wood fibre insulation material comprises at least 18 wt% lignin, such as at least 23 wt% lignin, for example at least 25 wt% lignin.

The lignin may be naturally occurring in the wood fibres. In some aspects, the lignin may help to provide a more stiff wood fibre.

The lignin content may preferably originate from the natural lignin content of the original wood material.

In one or more aspects of the present disclosure, the wood fibre insulation material comprises between 10 wt% and 40 wt% lignin, such as between 15 wt% and 35 wt% lignin.

**In** one or more aspects of the present disclosure, the wood fibre insulation material comprises at least 40 wt%, such as at least 50 wt%, cellulosic carbohydrates.

**In** one or more aspects of the present disclosure, the wood fibre insulation material comprises at least 30 wt% cellulose such as at least 40 wt% cellulose.

**In** one or more aspects of the present disclosure, the wood fibre insulation material (6) comprises less than 60 wt% cellulose such as less than 55 wt% cellulose, such as such as less than 50 wt% cellulose, For example less than 45 wt% cellulose.

The cellulosic carbon hydrates may comprise cellulose and hemicellulose.

**In** one or more aspects of the present disclosure, the wood fibre insulation material comprises less than 10 wt% hemicellulose such as less than 5 wt% hemicellulose, such as less than 3wt% hemicellulose.

This may provide an improved resistance to decay and microorganisms. The low hemicellulose amount may be obtained at least partly by means of heat treatment of the wood fibre insulation material.

**In** one or more aspects of the present disclosure, the wood fibre insulation material comprises at least 19 wt% hemicellulose such as at least 25 wt% hemicellulose, such as at least 30 wt% hemicellulose.

**In** some aspects of the present disclosure, the wood fibre insulation material may comprise less than 85 wt% combined cellulose and hemicellulose such as less than 80 wt% combined cellulose and hemicellulose.

**In** certain aspects of the present disclosure, the wood fibre insulation material may comprise 40-50 wt% cellulose, 25-40 wt% hemicelluloses, 18-30% lignin, and in some situations 1-10 wt% extractives and/or ashes.

**In** one or more aspects of the present disclosure, the wood fibre insulation material comprises elongated wood fibre components having a thickness and/or width of between 5 um and 100 um, such as between 10 um and 50 um, such as between 15 um and 50 um.

**In** one or more aspects of the present disclosure, at least 70 wt%, such as at least 80 wt%, e.g. at least 90 wt%, of the elongated wood fibre components may have a width of between 5 um and 100 um, such as between 10 um and 50 um, such as between 15 um and 40 um. This amount may preferably apply for the entire amount of wood fibre insulation material in a window frame cavity.

**In** one or more aspects of the present disclosure, at least 70 wt%, such as at least 80 wt%, e.g. at least 90 wt%, of the elongated wood fibre components may have a width that is lower than 80 um, such as lower than 60 um, for example lower than 40 um.

**In** some embodiments of the present disclosure, the thickness and/or width of the elongated wood fibre components may be an average thickness/width.

**In** one or more aspects of the present disclosure, the wood fibre insulation material comprises elongated wood fibre components having a length of between 1 mm and 8 cm, such as between 5 mm and 5 cm, for example between 8 mm and 3 cm.

**In** one or more aspects of the present disclosure, at least 70 wt%, such as at least 80 wt%, e.g. at least 90 wt%, of the elongated wood fibre components may have said length.

In one or more aspects of the present disclosure, at least 70 wt%, such as at least 80 wt%, e.g. at least 90 wt%, of the elongated wood fibre components may have a length above 1 mm, such as above 5 mm, such as above 8 mm.

In one or more aspects of the present disclosure, at least 5% such as at least 10%, such as at least 40% of wood fibre components of the wood fibre insulation material are clumped together at clumped parts with other wood fibre components of the wood fibre insulation material.

In further embodiments, the wood fibres at the clumped parts may here extend preferably in the same direction and abutting each other, with a total width. In some embodiments, said total width at the clumped parts may be at least twice, such as at least three, four or five times thicker than the average "loose" fibre component thickness/width CW.

In some embodiments, the wood fibres may in some embodiments, at the area of the clumped parts, be attached to each other.

In one or more aspects of the present disclosure the hollow profiles may provide the structural integrity of the frame, and wherein the wood fibre insulation material provides substantially no structural integrity to the frame.

In one or more aspects of the present disclosure, the frame comprises less than 5%, such as less than 1%, polymer based insulation material in the cavity/ies of the hollow profiles. Hence, e.g. the profile walls may be of a polymer material, whereas the insulation material as such, of the frame, may primarily comprise, such as consist of, the wood fibre insulation material.

This may provide a more environmentally friendly solution e.g. in relation to reduce CO₂ footprint during manufacturing and/or in order to provide a more recycle friendly solution.

In one or more aspects of the present disclosure, the profile(s) comprises reinforcements, such as metal reinforcements, such as ferromagnetic metal reinforcements, for contributing to the structural integrity of the frame.

In some aspects of the present disclosure, reinforcements, such as metal reinforcements, e.g. ferromagnetic metal reinforcements may be provided in order to obtain a more stiff frame structure of the window.

In one or more aspects of the present disclosure, the cavity is at least 80%, such as at least 95%, such as at least 99% filled with the wood fibre insulation material in the space between opposing inner surfaces of the hollow profile facing the cavity.

In one or more aspects of the present disclosure, the cross sectional area of the profiles may be at least 50%, such as at least 70%, e.g. at least 85% made up of said wood fibre insulation, preferably over at least 95%, such as at least 98% of the length of the profile.

In one or more aspects of the present disclosure, the cross sectional area of the cavity may be at least 80%, such as at least 90%, e.g. at least 99% filled with the wood fibre insulation, preferably over at least 95%, such as at least 98% of the length of the profile.

In one or more aspects of the present disclosure, the wood fibre insulation material comprises a wood fibre mat. In some further embodiments, the mat may comprise a rolled up, folded and/or compressed wood fibre mat.

In one or more aspects of the present disclosure, said wood fibre insulation material may be arranged inside an enclosure, such as a bag, sleeve or net, so that the enclosure is positioned between the wood fibre insulation material and the profile wall.

In one or more aspects of the present disclosure the one or more hollow profiles comprises a recessed portion into which the insulated glass unit extends.

The outer recessed portion may be enclosed by an outer wall surface arranged opposite an inner wall surface enclosing a cavity of the profile, e.g. a cavity comprising the wood fibre insulation material.

In one or more aspects of the present disclosure, the one or more profiles of the frame is/are a multi-cavity hollow profile comprising a plurality of cavities comprising the wood fibre insulation material, such as wherein said cavities are arranged along and opposite to an outer major surface of the insulated glass unit.

In one or more aspects of the present disclosure, the frame comprises a fixation frame and a sash, wherein the sash is connected to the fixation frame by means of a hinge arrangement so that the sash can be operable into an open and closed configuration by moving the sash relative to the fixation frame, wherein the insulated glass unit is arranged in the sash, and wherein one or both of the fixation frame and the sash comprises said one or more cavities comprising the wood fibre insulation material.

In one or more aspects of the present disclosure, the window profile polymer material has a thermal conductivity coefficient (λₚᵣ) below 1 W/(mK)

In one or more aspects of the present disclosure, the window profile polymer material is or comprises one of
- a thermoplastic such as Propylene,
- PVC
- CPVC,
- PP polypropylene
- PA6 Polyamide, or
- PET polyethylene terephthalate
- Polyurethane

The polymer material may in further aspects have fibres such as glass fibres or carbon fibres embedded therein.

In one or more aspects of the present disclosure, the one or more hollow profiles of the frame may be a multi-cavity hollow profile comprising a plurality of elongated cavities extending parallel to each other in the longitudinal direction of the respective multi-cavity hollow profile, wherein said multi-cavity hollow profile comprises a main cavity having a cross section that is at least 50%, such as at least 100%, e.g. at least 200% larger than each of the remaining cavities of the profile, and wherein at least the main cavity is filled with said wood fibre insulation material.

In one or more aspects of the present disclosure, the wood fibres insulation material is a thermally treated wood fibre insulation material.

This may e.g. help to provide a more stable insulation material, that may be more resistant to fungi.

The thermal treatment may in aspects comprise thermal treatment, in a furnace of or the like, for at least 30 minutes, such as at least 60 minutes at a temperature above 100°C, such as at at least 140°C, for example at least 200°C such as around 210°C - 230°C .

In aspects of the present disclosure, the polymer material may comprise or consist of CPVC (Chlorinated polyvinyl chloride),
In aspects of the present disclosure, the polymer material may comprise or consist of PVC (Polyvinyl chloride)
In aspects of the present disclosure, the polymer material may comprise or consist of PP (polypropylene).

In one or more embodiments of the present disclosure, the polymer material may consist of CPVC, PVC and/or PP. This CPVC, PVC and/or PP material may be fibre-reinforced by fibres such as carbon fibres or glass fibres embedded in the material, or such reinforcing fibres may be omitted.

The present disclosure moreover relates to a first method of filling a cavity of one or more building aperture window frame profiles with a natural fibre insulation material by means of a filling system, wherein the filling system comprises
- an insulation storage containing loose wood fibre insulation material,
- a dispensing system comprising a blowing or suction unit, and an outlet nozzle for dispensing the wood fibre insulation material from the insulation storage,
wherein the method comprises:
providing one or more elongated, hollow window frame profiles comprising walls of a polymer material, and wherein the one or more hollow profiles comprises at least one elongated cavity extending in the longitudinal direction of the one or more hollow profiles,
placing the outlet nozzle at or in the cavity to be filled with the loose wood fibre insulation material through an opening in the one or more hollow profiles, and
operating the blowing or suction system so as to supply the wood fibre insulation material from the insulation storage through the outlet nozzle and into the cavity, so as to fill the cavity with the wood fibre insulation material.

In one or more aspects of the first method, the filling system, such as at the blowing or suction unit, is operated so that the natural fibre insulation material is packed or provided inside the cavity with a density below 100 kg/m³, such as below 80 kg/m³, such as below 60kg/m³.

In one or more aspects of the first method, the filling system comprises a displacement drive, and a control system. In some aspects of the present disclosure the control system comprises a computer processor configured to process a program code stored in a data storage. The control system may in aspects be configured to control the displacement drive according to the program code to provide a relative movement between the outlet nozzle and the elongated, hollow profile so as to move the outlet nozzle out of the cavity while the wood fibre insulation material is provided into the one or more cavities through the outlet nozzle.

In one or more aspects of the first method, the displacement drive is controlled by the control system so that the natural fibre insulation material is packed inside the cavity with a density below 100 kg/m³, such as with a density below 80 kg/m³, such as below 60kg/m³.

In one or more aspects of the first method, the natural fibre insulation material in the insulation storage has been thermally treated for at least 30 minutes at least 100°C, such as at least 140°C, for example at least 200°C, before/prior to it is provided into the cavity.

This may help to provide a very dry insulation material and may help to reduce the thermal conductivity of the wood fibre insulation material and/or help to reduce subsequent collapsing of the wood fibre material.

In one or more aspects of the first method, the natural fibre insulation material, after it is provided into the cavity by means of the filling system, has a thermal conductivity coefficient (λᵢₘ) value below 0.06 W/(m·K), such as below 0.05 W/(m·K), such as below 0.04 W/(m·K).

In one or more aspects of the first method, two or more profiles, such as three or four profiles of the window frame have been assembled to provide at least a side and top or bottom profile of said frame, prior to providing the natural insulation material into one or more cavities of the frame by means of the filling system.

In one or more aspects of the first method, cavities of the assembled profiles may be in fluid communication, and wherein one inlet opening is used for providing the natural insulation material into cavities of several, assembled profiles.

In one or more aspects of the first method, the method is provided in order to provide a frame profile of a building aperture window according to any of the preceding aspects.

### Figures

Aspects of the present disclosure will be described in the following with reference to the figures in which:
- Fig. 1: : Illustrates a window according to embodiments of the present disclosure,
- Fig. 2: : Illustrates a roof window according to embodiments of the present disclosure,
- Fig. 3: : Illustrates a Scanning Electron Microscope (SEM) image of a wood fibre insulation material according to embodiments of the present disclosure,
- Fig. 4: : Illustrates a filling system for filling a cavity of a window frame profile with natural fibre insulation material, according to embodiments of the present disclosure,
- Fig. 5: : Illustrates a filling system for filling a cavity of an assembled window frame with natural fibre insulation material, according to embodiments of the present disclosure,
- Fig. 6: : Illustrates an embodiment of the present disclosure where an insulation material is filled into a frame cavity by first being placed in an enclosure, and
- Fig. 7: : illustrates an image of a window taken during the process of preparing for U_{window} testing of the window.
- Fig. 8: : illustrates an an embodiment where a wood fibre mat/block is placed inside a profile cavity, according to embodiments of the present disclosure.

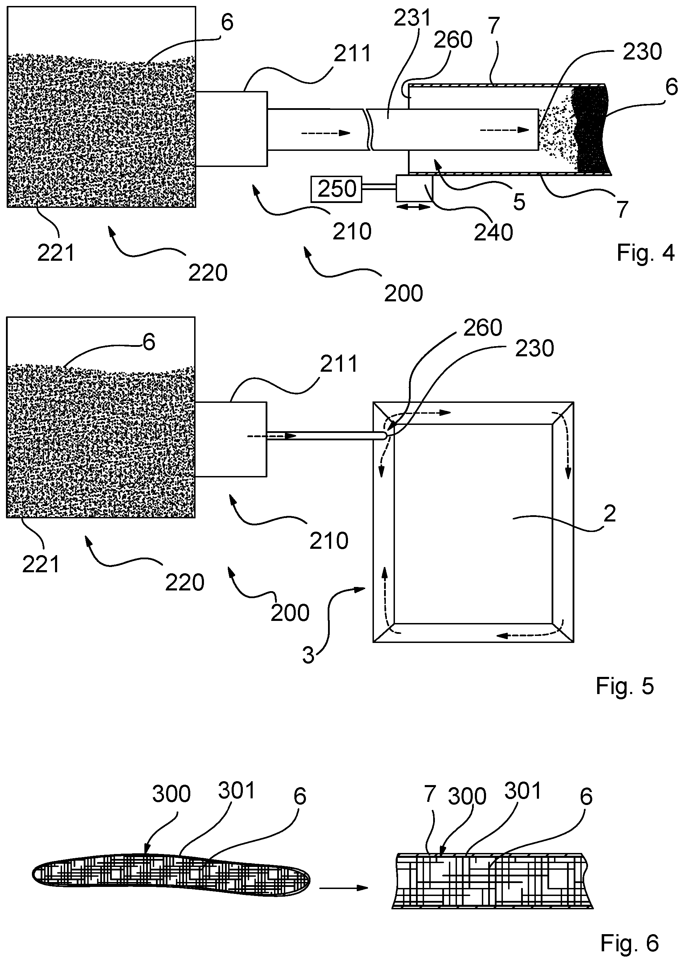

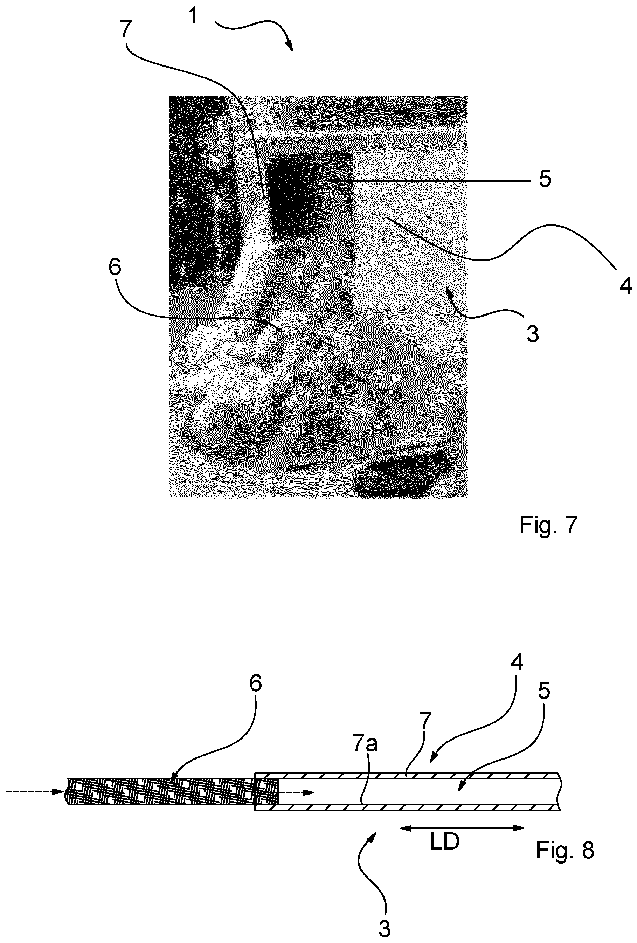

The methods shown in figures 6 and 8 do not form part of the present invention.

### Detailed description

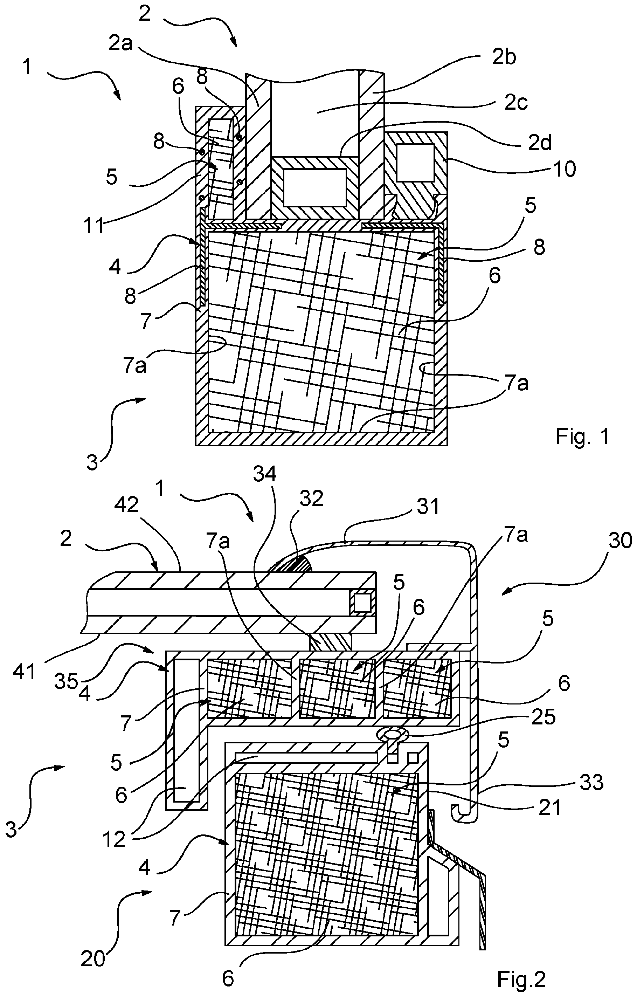

Fig. 1 illustrates schematically a cross sectional view of a window 1 to be placed in an aperture of a building according to embodiments of the present disclosure. The window 1 may e.g. be a window for vertical installation in an aperture of an outer wall of a building, or a roof window for installation in a roof construction, e.g. substantially horizontally, or with an angle between the pane 2 of the window 1 and horizontal (in a closed configuration of the window) of between 15° and 80°, such as between 17° and 65°.

The building aperture window 1 comprises an insulated glass unit 2 arranged in a frame 3. The insulated glass unit 2 comprises an insulating gap 2c arranged between opposing major surfaces glass sheets 2a, 2b such as tempered, such as thermally tempered, or annealed glass sheets. In other embodiments of the present disclosure, the insulated glass unit 2 may comprise more than one, such as two or three insulating gaps that are separated by intermediate glass sheets.

In some embodiments, the insulated glass unit 2 may be a laminated glass unit (not illustrated) where a further glass sheet is laminated to one or both outer major surfaces by means of an adhesive material such as an PVB or EVA material or the like. The insulated glass unit 1 should be transparent to at least visible light. In some embodiments, one or more low-e coatings may be provided at one or more major surfaces of the glass sheets 2a, 2b.

The gap 2c may be filled with a gas such as an inert gas, or the insulated glass unit may comprise a vacuum insulated gas unit (VIG) where the gap 2c between the glass sheets 2a, 2b may be evacuated. In the latter case, a plurality of pillars may be arranged in the evacuated gap to maintain a desired distance between the sheets 2a, 2b.

An edge seal solution 2d of the glass unit 2 is provide to seal the gap 2c at the periphery of the gap, and may be selected based on the type of glass unit. In some embodiments, the edge seal solution 2d may comprise a polymer edge profile, e.g. warm spacer bar with enhanced heat insulation material. In other embodiments, it may be a solder edge seal, e.g. in case the glass unit is a vacuum insulated glass unit.

The window 1 comprises a frame 3 in which the insulated glass unit 2 is arranged. The frame 3 comprises at least one, such as two, three or four hollow frame profiles 4. The frame 3 may in embodiments preferably comprise two parallel opposing side profiles and top and bottom profiles arranged perpendicular to the side profiles so as to provide a rectangular frame 3. The Hollow profiles comprising walls 7 of a polymer material.

The window profile polymer material providing the walls 7 may in embodiments of the present disclosure comprises one of a thermoplastic such as Propylene, PVC (Polyvinyl chloride ), CPVC (Chlorinated polyvinyl chloride), PP polypropylene, PA6 Polyamide, PET (polyethylene terephthalate) or Polyurethane, The walls 7 are preferably substantially solid walls.

The polymer material of the wall may in further aspects have fibres such as glass fibres or carbon fibres embedded therein, e.g. to increase the strength and/or structural integrity of the frame profile.

In certain embodiments of the present disclosure, either Polyurethane or PVC, such as CPVC, or PP may be preferred. For example, in further aspects, the PVC, such as CPVC or PP may comprise between 10 wt% and 30 wt%, such as between 15 wt% and 25 wt%, such as around 20 wt% of fibres such as glass or carbon fibres.

In one or more embodiments of the present disclosure, the window profile polymer material may have a thermal conductivity coefficient λₚᵣ below 1W/(mK). This thermal conductivity coefficient λₚᵣ may e.g. be determined by means of a Differential Scanning Calorimetry process, e.g. according to ASTM E1952 - 17.

As can be seen, the hollow profiles 4 comprises one or more cavities 5 that are enclosed by the walls 7 of the frame profile, and the walls 7 extends in the longitudinal direction of the profile. The profile in the example of fig. 2 comprises two cavities 5 comprising a minor cavity arranged opposite to a major outer surface of the glass unit 2, and a further major cavity arranged opposite to the edge surface of the insulated glass unit that extends between the outer major surfaces of the glass unit. It is understood that further or fewer cavities 5 may be provided in further embodiments of the present disclosure.

The walls 7 surrounds the cavity along the longitudinal direction of the profile at all sides of the wood fibre insulation material, and the walls 7 hence provides a closed cavity.

As can be seen, the edge of the insulated glass unit 2 extends into a recessed portion 9 of the profile 4. A side portion 11 of the profile 4 hence extends opposite to a major outer surface of the glass unit. Another holding profile 10 is attached to the frame profile 4, in this case by a mechanical fastening solution such as a clips solution that is integrated in the frame profile 4 and the holding profile 10. The holding profile 10 is arranged opposite the other major surface of the glass unit 2 so as to hold the insulated glass unit 2 in place in the frame 3. In the example of fig. 1, the side portion 11 comprises a cavity. The holding profile 11 may be substantially solid or hollow (as illustrated).

The frame profile 4 may in embodiments of the present disclosure optionally comprise one or more reinforcements 8 configured to contribute to the structural integrity of the frame and hence help to provide a more stiff frame profile.

The reinforcement(s) 8 may comprise elongated structures/components arranged along the profile 4, and may comprise metal reinforcements, carbon and/or glass fibre reinforcements, such as carbon fibre, glass fibre and/or metal profiles. In certain aspects, wood reinforcements may be provided, such as elongated wood profiles. In some embodiments of the present disclosure, the reinforcement(s) 8 may be embedded inside the wall and surrounded by the wall 7 material.

In other embodiments of the present disclosure, the reinforcement(s) 8 may be attached to the outer wall surface of the wall, e.g. by means of an adhesive and/or mechanical fastening means such as by being clicked, pushed and/or the like into a receiving part of the frame profile. The reinforcement(s) 8 may preferably extend at least 50%, such as at least 80% or 95 % of the length of the respective profile.

In embodiments of the present disclosure, the reinforcement(s) 8 may be partially attached, by adhesive or mechanical means to the profile. In yet another embodiment, the reinforcement may be attached to the polymer wall only at the ends of the reinforcement such that it is suspended inside the cavity

A metal reinforcement 8 may comprise iron reinforcement, steel reinforcement or aluminium reinforcement. In some embodiments of the present disclosure, the reinforcement(s) 8 comprises a metal reinforcement comprising a ferromagnetic metal reinforcement. Hereby, a magnet may be used for separating the reinforcement 8 from the remaining material 7 and/or 6 and/or 2 when the window is subsequently scrapped at the end of life.

The one or more reinforcements 8 may as illustrated in fig. 1 comprise angle profiles arranged at corner parts of the profile walls, and/or rods against or within parts of the profile wall.

One or more cavities 5 of the frame profile 4 is/are filled with an insulation material 6 which is a wood fibre insulation material.

The hollow profiles 4 of the window 1 may (together with optional reinforcement(s) 8) provide the structural integrity of the frame, and the wood fibre insulation material 6 may provide substantially no structural integrity to the window frame 3. At least some of the structural integrity of the frame 3 may be provided by the wall 7 material.

The wood fibre insulation material 6, when arranged in the cavity/cavities 5, may in embodiments of the present disclosure have a thermal conductivity coefficient λᵢₘ below 0.06 W/(m·K), such as below 0.05 W/(m·K), such as below 0.04 W/(m·K). This thermal conductivity coefficient λᵢₘ may in embodiments of the present disclosure at least be provided at, and determined at, about 23°C and at a relative humidity of about 50%, also denoted λ_{im (23,50)}.

The thermal conductivity coefficient/lambda value λᵢₘ may be a declared and/or rated value that may e.g. be determined according to proper standards and/or methods for defining/determining thermal conductivity of the wood insulation material in the frame. E.g., in one or more aspects of the present disclosure, the wood fibre insulation material may be determined to have a declared thermal conductivity that may e.g. be determined according to a suitable standard, such as DS EN 12667:2001 and/or according to a proper/suitable technical assessment such as an ETA (European Technical Assessment) that is suitable for defining the thermal conductivity coefficient of the wood fibre insulation material 6.

In embodiments of the present disclosure, the above mentioned thermal conductivity coefficient λᵢₘ of the wood fibre insulation material in the profile 3 cavity 5 may apply with a density of the wood fibre insulation material below 100 kg/m³, such as 80 kg/m³, such as below 60kg/m³.

In one or more embodiments of the present disclosure, the above mentioned lambda value/ thermal conductivity coefficient λᵢₘ may apply with a density above 15 kg/m³, such as 20 kg/m³, such as above 30 kg/m³.

In one or more embodiments of the present disclosure, the above mentioned lambda value/ thermal conductivity coefficient λᵢₘ may apply with a density between 15 kg/m³ and 100 kg/m³ preferably between 20 kg/m³ and 80 kg/m³ such as between 30 kg/m³ and 60 kg/m³.

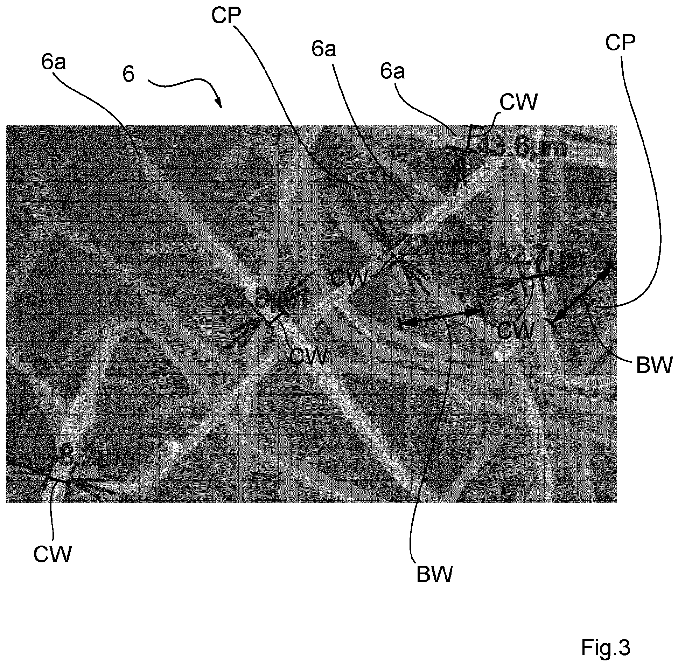

Further embodiments of the wood fibre insulation material is described in more details later on in relation to e.g. fig. 3.

In one or more embodiments of the present disclosure, the one or more hollow profiles 4, when comprising said wood fibre insulation material 6, may have/provide a U_{frame} value below 1 W/(m²·K), such as below 0.7 W/(m²·K), such as below 0.6 W/(m²·K). The U_{frame} value may be defined in a conventional way normally used for determining a U_{frame} value of a window frame. The Uframe Value may e.g. be determined according to ISO 10077-2 or ISO 12412-2.

In fig. 1, the hollow frame profile 4 is a multi-cavity hollow profile comprising a plurality of elongated cavities 5 extending parallel to each other in the longitudinal direction of the multi-cavity hollow profile 4). The multi-cavity hollow profile 4 comprises a main cavity that is arranged opposite to the edge of the insulated glass unit, but it is understood that the main cavity 5 may also be located at other locations dependent of the type of window and/or frame profile 4. The main cavity has a cross section that is at least 50%, such as at least 100%, e.g. at least 200% larger than each of the remaining cavities of the profile (such as the cavity inside the side portion 11). On embodiments of the present disclosure, at least the main cavity may be filled with said wood fibre insulation material 6, but it is understood that also minor cavities of the profile maybe provided with the wood fibre insulation material 6. However, some of the minor cavities may be remained unfilled and merely be filled with e.g. air.

Generally, it is understood that a cross section of a frame profile according to the present disclosure is determined in a plane extending perpendicular to the longitudinal direction of the respective frame profile 4.

One or more of the cavities 5 of the profile are filled with the wood fibre insulation material. The respective cavity/cavities 5 may each be at least 80%, such as at least 95%, such as at least 99% filled with the wood fibre insulation material 6 in the space between opposing inner surfaces 7a of walls 7 of the hollow profile 4. It is here to be understood that air may naturally be provided between the fibre material in order to improve insulation. Hence, by the term filled with the wood fibre insulation is understood that no major and consistent gaps may be provided between the insulation material and the inner frame surface. The wood fibre insulation material 6 is hence provided into the respective cavity in order to fill the cavity 5 with the wood fibre insulation material 6 with a desired insulation density. The wood fibre insulation material 6 may in embodiments of the present disclosure extend between at least three or four inner wall surfaces 7a facing, and together enclosing, the cavity 5. These surfaces 7a may be provided by walls 7 of the frame profile 7, and the wood fibre insulation material 6 may abut at least two, such as at least three or all of these wall surfaces 7a. The wall surfaces 7a may comprise a first set of opposing, substantially parallel wall surfaces 7a, and a second set of opposing, substantially parallel wall surfaces 7a, where the wall surfaces of the first set are arranged with an angle such as an acute angle, obtuse angle or right angle (right angle illustrated in fig. 1) to one or more wall surfaces of the second set of wall surfaces facing and enclosing the respective cavity. The wall surfaces 7a may provide a cavity 5 with a cross sectional shape of a polygon, such as a non self-intersecting polygon. The polygonal cross sectional shape of one or more of the cavities 5 may comprise a triangular shape, rectangular shape (illustrated in fig. 1), a pentagonal- or hexagonal shape and/or any other suitable cross sectional shape. In embodiments of the present disclosure, different cross sectional shapes of different co-extending cavities of the same frame profile may be provide in embodiments of the present disclosure. It may though be provided that the angle between neighbouring surfaces of a cavity is above 20°, such as above 30° or above 40° to provide that the wood fibre insulation material may more easily fill out a larger part of the cavity 5.

In some embodiments of the present disclosure, the cross sectional area of the cavity 5 may be at least 80%, such as at least 95%, such as at least 99% filled with the wood fibre insulation, preferably over at least 95%, such as at least 98% of the length of the profile.

In one or more embodiments of the present disclosure, the cross sectional area of the profiles may be at least 50%, such as at least 70%, e.g. at least 85% made up of said wood fibre insulation 6, preferably over at least 95%, such as at least 98% of the length of the profile 4.

Fig. 2 illustrates a window 1 according to embodiments of the present disclosure, wherein the window is a roof window. The window 1 comprises an insulated glass unit 2as e.g. previously described, arranged in a sash 2. The insulated glass unit may be a laminated insulated glass unit 2. The glass unit 2 may be attached to the sash 30 by means of an adhesive 34 and/or by means of clamping or the like.

It is generally understood that the frame 3 of a window according to the present disclosure may comprises a fixation frame 20 and a sash 30, wherein the sash 30 is connected to the fixation frame 20 by means of a hinge arrangement (not illustrated) so that the sash 30 can be operable into an open and closed configuration by moving the sash relative to the fixation frame 20. The insulated glass unit is arranged in the sash 30. It is understood that the roof window may be a so called centre hung sash where the hinge arrangement is placed at side parts of the fixation frame 20 and sash 30, between the top and bottom part of the sash. In other embodiments, the sash 30 of the roof window may be top hung. One or more compressible gaskets 25 such as a rubber gaskets or the like may be provided between the sash and the frame with the purpose of improving water tightness and/or air tightness of the frame 3 when the sash is closed.

In embodiments of the present disclosure, at least the frame profile 4 of the fixation frame 20 may comprise one or more cavities 5 comprising the wood fibre insulation material. In embodiments of the present disclosure, at least the frame profile 4 of the sash 30 may comprise one or more cavities 5 comprising the wood fibre insulation material. In the example of fig. 2, both the frame profile 4 of the sash 30 and the frame profile 4 of the fixation frame 20 comprises cavities 5 comprising the wood fibre insulation material 6.

As can be seen, the sash 30 may comprise a profile part 35 arranged opposite to the outer major surface 41 of the insulated glass unit 2 that is configured to face the interior of the building. This part of the sash profile 4 comprises cavities 5, in the present example three parallel and co-extending cavities, that are separated by profile separation walls 7a. Each of the cavities are filled with the woodfiber insulation material 6 so that the material 6 abuts opposing wall surfaces, such as the major part of the surfaces or all surfaces enclosing and facing the respective cavity 5. The separation walls 7a may also, in some embodiments of the present disclosure, be omitted to obtain a larger cavity for the wood fibre insulation material 6. The partition walls 7 may provide enhanced strength to the sash 30 profile 4.

The sash 31 comprises a covering wall 31 that extends in over the outer major surface 42 of the glass unit 2. This covering wall 31 may be attached to the surface 42 by means of a sealing material, such as an adhesive, e.g. for water tightening purpose, in order to reduce the amount of foreign objects such as particles, water and/or the like that enters in between the sash 30 and glass unit 2 to an interior part of the sash.

Additionally, the sash 30 may as illustrated comprise a side cover wall 33 that extends over and opposite to an outwardly facing side wall surface 21 of the fixation frame 20. This provides a water protection, at least when the sash is in a closed position/configuration, as the water is hence guided from the sash profile and out over the fixation frame, towards the roof.

The fixation frame 20 also comprises a cavity 5, in this case a major cavity, filled with the wood fibre insulation material. As can be seen, both the profile 4 of the sash 30 and the profile of the fixation frame 20 may comprise unfilled cavities 12 that are instead filled with air.

In some embodiments of the present disclosure, though not illustrated, the fixation frame 20 may comprises a top cover plate member providing a top end cladding device that is stationary and extends in over and thus overlaps a top part of the frame profile 4 of the sash 20. The sash can move relative to the cladding device.

It is generally understood that even though frame reinforcement(s) (see ref. 8 in fig. 1) is/are not disclosed in fig. 2 it is understood that one or more reinforcements as e.g. previously described may be present in the sash 30 and/or fixation frame 20 profile(s) 4.

Fig. 3 illustrates a SEM image of a wood fibre insulation material 6 according to embodiments of the present disclosure, that may be arranged inside and fill one or more cavities of a window frame profile according to embodiments of the present disclosure, e.g. as previously described.

The wood fibre insulation material 6 here comprises loose wood fibres, and may in some embodiments substantially consists of loose wood fibres. In other embodiments, the wood fibres may be bound together to form a wood insulation fibre mat, e.g. by means of an added polymer material. The wood fibre insulation material 6 may in embodiments of the present disclosure comprise less than 1 wt% added polymer binder material, such as less than 0.5wt% or less than 0.1% added polymer material. It is understood that some of the loose fibre components 6a may be clumped together, but it is understood that substantially no binding compound, such as polymer binding material may be added with the purpose of providing further binding between the wood components comprising the wood fibres.

In embodiments of the present disclosure, the wood fibre insulation material 6 is configured to be unfastened to the walls of the profile facing the cavity. Here, the wood fibre insulation material 6 may abut/support against the interior wall surfaces of one or more of the frame profile walls 7, but may be removed again e.g. by means of one or more of a blowing operation, suction operation, pushing and/or pulling operation and/or shaking operation acting on the insulation material when the window is scrapped and recycled, with a low degree of retention of the insulation material in the cavity 5.

The wood fibre insulation material 6 comprises a plurality of elongated wood fibre components 6a. These components may in embodiments of the present disclosure have a width/thickness CW of between 5 um (micro meters) and 100 um, such as between 10 um and 50 um, such as between 15 um and 45 um. Fig. 3 illustrates a measured width CW of several of such elongated wood fibre components 6a representative of the general wood fibre component 56a width/thickness. In the illustrated, measured examples, the with/thickness CW is in the range of 22.6 um to 43.6 um

In embodiments of the present disclosure, at least 70 wt%, such as at least 80 wt%, e.g. at least 90 wt%, of the elongated wood fibre components 6a may have said component 6a width/thickess CW of between 5 um and 100 um, such as between 10 um and 50 um, such as between 15 um and 40 um. The thickness/width CW may apply to at least 50%, such as at least 70% or 80% or the length of the respective component 6a.

In embodiments of the present disclosure, at least 70 wt%, such as at least 80 wt%, e.g. at least 90 wt%, of the elongated wood fibre components 6a of the wood fibre insulation material may have a width CW that is lower than 80 um, such as lower than 60 um, for example lower than 40 um.

The image of fig. 3 illustrates a further embodiment of the present disclosure, where it can be seen that at least some of the elongated wood fibre components 6a may be clumped/bundled wood fibre components 6a. Some of the clumped wood fibre components (see components at the CW markings of fig. 3) are arranged in more thick, clumped parts CP of the wood fibre insulation material 6, and the wood fibres of the clumped parts CP here extends, preferably in the same direction and abutting each other with a total width BW at the clumped parts that is at least twice, such as at least three, four or five times thicker than the average "loose" fibre component 6a thickness/width CW. The fibre components 6a may extend from the clumped part CP and into a more free configuration with air surrounding the individual fibre component 6a. The bundling or clumping may e.g. occur due to the manufacturing process of the wood fibre insulation material. This process may comprise a mechanical shredding and/or grinding and/or sawing process. Additionally or alternatively, the manufacturing process may comprise generating a wood pulp, where the outcome, after drying, may comprise the wood fibre insulation material. In embodiments of the present disclosure, at least 5% such as at least 10% or at least 40% of the wood fibre components 6a may be clumped together at clumped parts CP with other wood fibre components 6a of the wood fibre insulation material 6.

In some embodiments, the wood fibres may, at the area of the clumped parts, be attached to each other. This attachment may originate from that the wood fibres not being fully separated during the manufacturing process.

A major part of the wood fibre components 6a of the wood fibre insulation material 6 may have a length of between 1 mm and 8 cm, such as between 5 mm and 5 cm, for example between 8 mm and 3 cm. In embodiments of the present disclosure, at least 70 wt%, such as at least 80 wt%, e.g. at least 90 wt%, of the insulation material 6 may comprise elongated wood fibre components 6a may have a length above 1 mm, such as above 5 mm, such as above 8 mm.

The wood fibre material of the wood fibre insulation material 6 may in one or more embodiments of the present disclosure be treated with, such as impregnated with, fire retardant compound and/or anti-fungus compound(s). In some embodiments of the present disclosure the fire retardant compound and/or anti-fungus compound may comprise boric acid, borax and/or ammonium sulfate and/or a nitrogen source such as ammonium polyphosphate. In additional or alternative embodiments, the fire retardant and/or anti-fungus compound may be selected among environmental friendly compounds. These may be compounds that may be known for use as fire retardant and/or anti-fungus compounds in wood material.

The wood fibre material 6 may in embodiments of the present disclosure comprise less than 30wt%, such as less than 20wt%, such as less than 10 wt%, for example less than 5wt% of said fire retardant compound and/or less than 30wt%, such as less than 20wt%, such as less than 10 wt%, for example less than 5wt% of said anti-fungus compound(s).

In embodiments of the present disclosure the wood fibre insulation material 6 may comprise at least 1wt%, such as at least 5wt%, such as at least 10 wt%, for example at least 15wt% of said fire retardant compound and/or said anti-fungus compound(s).

In one or more embodiments of the present disclosure, the wood fibre material may be treated with both fire retardant compound and anti-fungus compound(s). The wood fibre insulation material may in embodiments hereof comprise a total amount of fire retardant compound and anti-fungus compound that is less than 30wt%, such as less than 20wt%, such as less than 10 wt%, for example less than 5wt% of the wood fibre insulation material.

It is understood that the wood fibre insulation material 6 that is placed in the cavity/cavities 5 may comprises at least 96 wt%, such as at least 99 wt%, for example at least 99.9 wt% of wood fibre material. As an example, wood fibre insulation material 6 that is placed in the cavity/cavities 5 may comprise 99 wt%, of wood fibre material. This wood fibre material may comprise fire retardant compound and/or anti-fungus compound, for example a total amount of between 5wt% and 30wt% of added fire retardant compound and anti-fungus compound.

In embodiments of the present disclosure, the wood fibre insulation material comprises at least 10 wt% lignin, such as at least 15 wt% or 20 wt% lignin. In embodiments of the present disclosure, the wood fibre insulation material comprises at least 18 wt% lignin, such as at least 20 wt% lignin, such as at least 23 wt% lignin. For example at least 25 wt% lignin. In some embodiments of the present disclosure, the wood fibre insulation material 6 comprises between 10 wt% and 40 wt% lignin, such as between 15 wt% and 35 wt% lignin.

In embodiments of the present disclosure the wood fibre insulation material 6 may comprises at least 40 wt%, such as at least 50 wt% carbohydrates such as cellulosic carbohydrates.

In some embodiments of the present disclosure, the wood fibre insulation material 6 may comprises at least 30 wt% cellulose such as at least 40 wt% cellulose.

In some embodiments of the present disclosure, the wood fibre insulation material 6 may comprise less than 60 wt% cellulose such as less than 55 wt% cellulose, such as such as less than 50 wt% cellulose, For example less than 45 wt% cellulose.

The wood fibres insulation material 6 may be thermally treated prior to be arranged in the cavity of the window frame 3 profile 4.

The thermal treatment may comprise a thermal treatment for at least 30 minutes, such as at least 60 minutes. For example between 30 minutes and 3 hours. The thermal treatment may be provided at a temperature above 100°C, such as least 140°C, for example at least 200°C such as around 210°C -230°C . In some embodiments, the temperature used during the thermal treatment may be between 160°C and 260°C. The thermal treatment may be provided by means of convection heating, but it is understood that also infrared radiation may be provided for the heat/thermal treatment

In embodiments of the present disclosure, the wood fibre insulation material 6 comprises less than 10 wt% hemicellulose such as less than 5 wt%, such as less than 3wt% hemicellulose. This may e.g. be obtained by said heat treatment.

In embodiments of the present disclosure, the wood fibre insulation material 6 may comprise at least 19 wt% hemicellulose such as at least 25 wt% hemicellulose, such as at least 30 wt% hemicellulose.

In some embodiments of the present disclosure, the wood fibre insulation material comprises less than 85 wt% combined cellulose and hemicellulose such as less than 80 wt% combined cellulose and hemicellulose. In certain embodiments of the present disclosure, the wood fibre insulation material may comprise 40-50 wt% cellulose, 25-40 wt% hemicelluloses, 18-30% lignin, and in some situations 1-10 wt% extractives and/or ashes.

In one or more embodiments of the present disclosure, the wood fibre insulation material 6 in the one or more cavities 5 of the profile 4 may be placed in the cavity with a density below 100 kg/m³, such as below 80 kg/m³, such as below 60kg/m³. This density of the wood fibre insulation material 6 may be at/determined at e.g. 20°C and 50% relative humidity in the ambient air.

In one or more embodiments of the present disclosure, the previously mentioned thermal conductivity coefficient (λᵢₘ) below 0.06 W/(m·K), such as below 0.05 W/(m·K), such as below 0.04 W/(m·K) may apply with a density of the wood fibre insulation material above 15 kg/m3, such as 20 kg/m3, such as above 30 kg/m3.

In embodiments of the present disclosure, the wood fibre insulation material may generally be arranged in the cavity 5 to have a density, between 15 kg/m³ and 100 kg/m³, such as between 20 kg/m³ and 80 kg/m³ , such as between 30 kg/m³ and 60 kg/m³ or between 20 kg/m³ and 60 kg/m³ (both endpoints included).

A way of determining the density of the wood fibre insulation material may be provided by cutting or by other means opening the profile 4, and remove and weigh the insulation material 6, and moreover determine the volume of the cavity 5 wherein it is was arranged. The determination of the volume of the cavity may e.g. be provided by means of filling it with water and determining the volume of the water afterwards, or by other means of determining the cavity volume. It may here be assumed that the cavity has been substantially filled in the desired way with the wood fibre insulation material 6 having the desired density and the desired thermal conductivity coefficient λᵢₘ. The conditions when determining the density may be at 23° C and a relative humidity of 50%. In that case, the profile 4 comprising the insulation material should have been kept under these conditions for long enough to adapt/settle to the temperature and air humidity, e.g. for several days such as at least two days.

Having the wood fibre insulation material 6 properly provided into the profile 4 cavity 5, and be arranged here with the desired density may be obtained by different methods according to embodiments of the present disclosure.

The wood fibre insulation material may in embodiments of the present disclosure be obtained by means of a manufacturing process comprising mechanical shredding and/or grinding and/or sawing process.

Fig. 4 illustrates schematically an embodiment of the present disclosure where the wood fibre insulation material 6 is a loose insulation material that is provided into the cavity by means of a fluid flow.

Here a filling system 200 is provided. The filling system comprises an insulation storage 220 containing natural fibre insulation material 6, such as loose wood fibre insulation material. The system 200 moreover comprise s a dispensing system 210 comprising a blowing or suction unit 211 that may e.g. be driven by a drive unit such as an electric or pneumatic motor. The system 200 comprises a pipe or hose 231 with an outlet nozzle 230 for dispensing the natural fibre insulation material 6 provided from the insulation storage by means of the unit 211.

A hollow window profile 4 comprising one or more cavities and comprising profile walls 7)of a polymer material is provided. hollow profile 4 comprises at least one elongated cavity 5 extending in the longitudinal direction of the one or more hollow profiles. The outlet nozzle 230 is placed at or in the cavity 5 to be filled with the loose natural fibre insulation material. Then, the blowing or suction system 210 is operated so as to supply the natural fibre insulation material 6 from the insulation storage 220 through the outlet nozzle 230 and into the cavity so as to fill the cavity 5 with the natural fibre insulation material.

It is understood that the filling system 200, such as at the blowing or suction unit 211, may be operated so that the loose natural fibre insulation material 6 is packed inside the cavity with a density below 100 kg/m³, such as below 80 kg/m³, such as below 60kg/m^{3,} e.g. a density as previously described. This may be provided by adjusting the speed of the blowing or suction unit to assure that the correct amount of loose wood fibre insulation material is provided per time unit through the outlet 230.

In certain embodiments of the present disclosure, the filling system 200 comprises a displacement drive arrangement 240, and a control system 250, such as comprising a computer processor configured to process a program code stored in a data storage. The control system is configured to control the displacement drive 240, such as by means of controlling an electric motor such as a servo motor according to the program code to provide a relative movement between the outlet nozzle 230 and the elongated, hollow profile 4 so as to move the outlet nozzle gradually out of the cavity while the wood fibre insulation material is provided into the one or more cavities through the outlet 230. This displacement may comprise displacing the profile 4 relative to the nozzle outlet 230 and/or by displacing the outlet nozzle 230 relative to the frame profile 4.

The displacement drive 240 may be controlled by the control system 250 with a displacement speed so that the natural fibre insulation material is packed inside the cavity with a density below 100 kg/m³, such as with a density below 80 kg/m³, such as below 60kg/m³ e.g. with a density as previously described. The control system 250 may also control the blowing or suction unit 211. The displacement speed may be controlled by the control system according to the program code, e.g. based on a speed setting in a software parameter. Hence, the speed setting may be defined based on experiential data where it has been assessed that that speed may be the correct speed in order to obtain the desired packing of the insulation material in the profile cavity 5. Hence, if another insulation material type 6 is used and/or another profile type, such as profile size or shape, where the cavity 5 has a different cross sectional geometry and/or cross sectional size, the software may comprise another displacement speed setting for use for that profile and/or insulation material type.

The natural fibre insulation material 6 in the insulation storage 220 may have been thermally treated as e.g. previously described prior to entering the storage, or the storage may facilitate storage during the heat treatment (not illustrated). In some embodiments of the present disclosure, the filling system 200 may comprise an air temperature and/or humidity control system (not illustrated) for assuring and controlling the environment for storage of the insulation material in the storage 220.

It is understood that the storage 220 comprises walls 221, e.g. with a door to the cavity 220.

The natural fibre insulation material 6 may, after it is provided into the cavity 5 by means of the filling system 200, have a thermal conductivity coefficient λᵢₘ below 0.06 W/(m·K), such as below 0.05 W/(m·K), such as below 0.04 W/(m·K) as e.g. previously described.

In fig. 4, the insulation material is provided through a cavity 5 opening 260 in the profile 4 end between opposing walls 7 of the cavity.

Fig. 5 illustrates an embodiment of the present disclosure where a filling system 200, e.g. substantially as previously described in relation to fig. 4 (Though a displacement drive may be omitted) may be used for filling the cavity or cavities 5of a hollow window frame profiles 4 after the profiles of the frame 3 have been assembled.

Here, the frame 3 comprises an inlet opening 260 to a cavity 5 of the frame. This inlet opening may be placed in a wall 7 of a profile of the frame or at an end of a profile. The filling system 200 provides the natural fibre insulation material, such as wood fibre insulation material, into the cavity through the inlet opening 260. The cavities 5 of the neighbouring profiles may be interconnected/in fluid communication, and hence, the blowing system may provide the insulation material into also cavities 5 of other profiles 4 of the frame 3 than the profile comprising the opening 260. In some embodiments, the filling system 200 may provide a circular flow as illustrated by the dashed arrows of insulation material through cavities of different profiles 4 arranged in fluid communication with each other. Some minor openings (not illustrated) may be provided in the frame in order to provide an outlet or inlet for air. It is understood that in some embodiments of the present disclosure, one inlet opening 260 may be used for filling one or more cavities of all profiles 4 of the frame. In other embodiments of the present disclosure, two, three or all of the profiles 4 of the frame 3 may comprise an inlet opening 260 through which the insulation material 6 is provided after the profiles 4 have been assembled, e.g. at corners of the frame 3 e.g. in a chamfered corner connection. The inlet opening(s) 260 may in embodiments of the present disclosure be arranged in a recessed portion of the profile, e.g. so that it is hidden by the insulated glass unit 2 when the glass unit is arranged in the frame (of the frame is a sash). In embodiments of the present disclosure, the inlet opening(s) 260 may preferably be arranged at a location that will not be visible after installation of the window 3, e.g. at a surface or part of the profile that will face a part of the building (such as wall or roof structure of the building) upon installation in the building. The opening(s) 260 may be sealed by a plug or the like after the insulation material has been provided into the frame cavity 5.

In the illustrated example of fig. 5, all four frame profiles, i.e. side frame profiles and to and bottom frame profiles 4 are assembled, but in some embodiments e.g. only one side profile and a top or bottom profile may be assembled. In other embodiments three profiles such as two side profiles and an interconnecting top or bottom profile (thereby providing a U-shape) may have been assembled, or top and bottom profile may have been assembled with a side profile. The remaining profile(s) may be assembled to the frame after the insulation 6 has been provided into the cavities by the system 200. It is understood that the frame profile(s) 4 filled by means of a method according to the present disclosure may be profiles 4 for a sash 30 and/or a fixation frame 20 of a window frame 3 as previously described.

It is generally understood that one, two or more of the top, bottom and side profiles of the fixation frame and/or sash may comprise the wood insulation material whereas the wood fibre insulation material 6 may be omitted form the remaining profile(s) of the fixation frame and/or sash.

In some embodiments, e.g. one or both side profiles, the top profile or the bottom profile of the fixation frame may comprise the wood fibre insulation material 6 as described in the present disclosure, whereas the wood fibre insulation material may be omitted in the adjoining side profile, top profile or bottom profile of the sash.

In other embodiments, e.g. one or both side profiles, the top profile or the bottom profile of the sash may comprise the wood fibre insulation material 6 as described in the present disclosure, whereas the wood fibre insulation material may be omitted in the adjoining side profile, top profile or bottom profile of the fixation frame.

In further embodiments, e.g. the bottom profiles of the fixation frame and sash may comprise the wood fibre insulation material 6 whereas the wood fibre insulation material may be omitted from the side profile(s), and/or top profile of the fixation frame and/or sash.

In still further embodiments, e.g. the side profiles of the fixation frame and sash may comprise the wood fibre insulation material 6 whereas the wood fibre insulation material may be omitted from the top profiles, and/or bottom profile of the fixation frame and/or sash.

For example, in case a space saving solution of the sash may be provided, one or more profiles of this may comprise one or more (such as all) smaller internal cavities that may be maintained empty with respect to the wood fibre insulation material, and for example filled with air. However, the adjoining profile of the fixation frame, such as a top, bottom or side profile, may comprise the wood fibre insulation material as the cavity/ies here may be larger due to a different cavity design/layout and/or that the cross sectional area of the fixation frame profile is larger than the cross sectional area of the adjoining sash profile. The opposite may also occur in case the sash comprises one or more larger cavities when compared to the cavity/ies of an adjoining profile of a fixation frame, so that one or more cavities of the sash is filled with the wood fibre insulation material whereas the wood fibre insulation material may be omitted in the adjoining profile of the fixation frame, e.g. due to difference in cavity layout and/or difference in cross sectional area between the sash and frame.

It is naturally understood that in embodiments of the present disclosure, all of the side, top and bottom profile(s) of the sash, and/or all of the side, top and bottom profile(s) of the fixation frame may comprise the wood fibre insulation material placed in one or more cavities of the respective profile.

In case the window does not comprise a movable sash, but is configured so that the frame 3 is a fixed frame design with no hinges or the like, it is understood that one or more of the frame profiles of that frame 3 may comprise the wood fibre insulation material 6

Fig. 6 illustrates schematically a further embodiment of the present disclosure, relating to a method of manufacturing a window profile 4 with a wood fibre insulation material, such as a loose wood fibre insulation material. This method does not form part of the present invention. This method comprises providing one or more elongated, hollow profiles 4 as e.g. previously described, comprising walls 7 of a polymer material.

An enclosure 300, such as a bag, sleeve or net, is placed to surround or enclose a natural fibre insulation material 6, such as a (e.g. loose) wood fibre insulation material (6). The enclosure 500 with the natural fibre insulation material therein is then placed into the cavity 5 or cavities, such as at least a major cavity, of the profile. This may be provided by pushing and/or pulling the enclosed insulation material 6 into the cavity 5 in the longitudinal direction of the cavity 5.

The enclosure 300 may provide a compression force on the natural fibre insulation material. Hence, after the enclosure 300 has been placed properly in the cavity, at least a part of the compression force may be released so as to allow the wood fibre insulation material (6) to expand in cavity 5. Hence, the wood fibre insulation material will hereafter abut most, if not all of interior surfaces 7a of the profile walls enclosing the cavity.

In some embodiments of the present disclosure, the enclosure 300 may comprise a flexible bag 301 such as a substantially air-tight bag, for example a polymer or metal based bag or the like. The pressure inside the bag may here have been reduced, e.g. by means of a vacuum unit (not illustrated) that may reduce the pressure and subsequently seal the bag. In this example, the step of at least partially releasing the compression force on the wood fibre insulation material may comprise perforating the bag after it has been placed in the cavity.

The enclosure 300 wall 301 may additionally or alternatively comprise one or more flexible strings, such as a net, arranged around the insulation material 6, which provides/subjects the compression force. The step of releasing the compression force may hence e.g. comprise one or more of a cutting operation, untying operation and/or removing operation provided to the one or more flexible strings. In this example, the wall 301 of the enclosure may not be air tight.

In some embodiments of the present disclosure, the enclosure 300 wall 301 comprises a natural fibre material or substantially consist of a natural fibre material.

I one or more embodiments of the present disclosure, the enclosure 300 wall 301 comprises less than 20%, such as less than 10%, for example less than 1% polymer material.

### Tests

Fig. 7 is a close-up image of a corner part of a window 1 taken during a test of the insulation performance of a wood fibre insulation material 6 in a cavity 5 of the window. The inventors have provided tests on the 100cm x 100cm window 1 in the fig. 7 image, where the window comprised a frame made from hollow PVC profiles, and with an insulated glass unit/pane (not illustrated in fig. 7) arranged therein.

The U_{window} value (i.e. the overall insulation performance of the window) was first tested with a conventional Expanded Polystyrene insulation (EPS) insulation in cavities 5 of the frame 3. The U_{window} value was here determined to be 1.9 W/m²k The same U_{window} value was then tested in a similar way again on the window 1 with the EPS insulation removed and hence with substantially empty cavities of the window frame profiles that was initially filled with the EPS. The result hereof was a U_{window} value of 2.3 W/m²k.

Then, a loose wood fibre insulation material 6 was then provided into the empty cavities of the frame profiles of the window. The loose wood fibre insulation material 6 was provided into the cavities of the frame through the shown openings at corner areas (see fig. 7) of the assembled frame 3 with the insulating pane arranged in the frame. The U_{window} value was then tested again in a similar way. The result hereof was a U_{window} value of 1.9 W/m²k.

Accordingly, it was concluded that loose wood fibre insulation material 6 in a PVC profile of a window may facilitate providing a heat insulation performance of the window 1 that may be at least as good as with conventional EPS insulation, and with reduced carbon footprint and improved possibilities of subsequent recycling due to the use of wood fibre insulation material 6.

Fig. 8 schematically illustrates an embodiment of the present disclosure where the wood fibre insulation material 6 is provided as a wood fibre mat. This method does not form part of the present invention. The mat may e.g. be a block/unit of wood fibre insulation material 6. This may e.g. be obtained by means of bonding the wood fibre components together means of a binder such as an added polymer material prior to introducing the wood fibre insulation into the hollow cavity/cavities 5 of the hollow profile(s) 4 that is/are enclosed by the walls 7 of the frame profile 4. The frame profile 4 may here be open at an end, and the wood fibre mat may be introduced into the cavity/cavities 5 from the open end in the longitudinal direction LD of the profile.

In some embodiments of the present disclosure, the wood fibre mat may be a rolled up, folded and/or compressed mat, and for example an inherent resiliency of the wood fibre material may help the mat to expand in the cavity 5 after inserting the wood fibre insulation material in the cavity 5 to assure the desired insulating properties.

In some embodiments of the present disclosure, the wood fibre mat may be a substantially un-compressed wood fibre mat that is introduced into the cavity

In some embodiments of the present disclosure, an enclosure 300 as e.g. described above in relation to fig. 6 (not illustrated in fig. 8) may be used, and the mat may e.g. be placed inside such an enclosure. The enclosure may in some embodiments of the present disclosure provide a certain compression force onto the wood fibre mat, which may be released after the mat is placed in the cavity.

However, generally, in some embodiments of the present disclosure, the enclosure 300 may provide the functionality of providing means for introducing and/or removing the insulation material in the cavity, as pulling in and/or pushing at the enclosure may help to easily remove the insulation material from the cavity again while reducing the amount of insulation material maintaining inside the cavity 5.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations or substitutions not heretofore described, as long as the resulting embodiment falls under the scope of the present invention as defined by the appended claims.

## Claims

1. A building aperture window (1), wherein the building aperture window (1) comprises an insulated glass unit (2) arranged in a frame (3),
wherein the frame (3) comprises one or more hollow profiles (4) comprising walls (7) of a polymer material, and wherein the one or more hollow profiles (4) comprises one or more cavities (5) with a wood fibre insulation material (6),
wherein the wood fibre insulation material (6) has a thermal conductivity coefficient (λᵢₘ) below 0.06 W/(m·K), such as below 0.05 W/(m·K), such as below 0.04 W/(m·K),
wherein the wood fibre insulation material (6) comprises at least 10 wt% lignin, and wherein said polymeric material is selected from one or more of CPVC (Chlorinated polyvinyl chloride), PVC (Polyvinyl chloride) and PP (polypropylene).

2. A building aperture window (1) according to any of the preceding claims, wherein the wood fibre insulation material (6) in the one or more cavities (5) has a density, between 15 kg/m³ and 100 kg/m³, such as between 20 kg/m³ and 80 kg/m³, such as between 30 kg/m³ and 60 kg/m³ or between 20 kg/m³ and 60 kg/m³ (both endpoints included).

3. A building aperture window (1) according to any of the preceding claims, wherein the wood fibre insulation material (6) comprises loose wood fibres (6a), such as substantially consists of loose wood fibres (6a).

4. Building aperture window (1) according to any of the preceding claims, wherein the wood fibre insulation material (6) comprises less than 60 wt% cellulose such as less than 55 wt% cellulose, such as such as less than 50 wt% cellulose.

5. Building aperture window (1) according to any of the preceding claims, wherein the wood fibre insulation material (6) comprises at least 19 wt% hemicellulose such as at least 25 wt% hemicellulose, such as at least 30 wt% hemicellulose.

6. Building aperture window (1) according to any of the preceding claims, wherein the wood fibre insulation material comprises at least 96 wt%, such as at least 99 wt%, for example at least 99.9 wt% wood fibre components.

7. Building aperture window (1) according to any of the preceding claims, wherein the wood fibre insulation material (6) comprises elongated wood fibre components having a thickness (CW) of between 5 um and 100 um, such as between 10 um and 50 um, such as between 15 um and 50 um.

8. Building aperture window (1) according to any of the preceding claims, wherein the wood fibre insulation material comprises elongated wood fibre components having length a of between 1 mm and 8 cm, such as between 5 mm and 5 cm, for example between 8 mm and 3 cm.

9. Building aperture window (1) according to any of the preceding claims, wherein at least 5%, such as at least 10%, such as at least 40% of wood fibre components (6a) of the wood fibre insulation material (6) are clumped together at clumped parts (CP) with other wood fibre components (6a) of the wood fibre insulation material 6.

10. Building aperture window (1) according to any of the preceding claims, wherein the walls (7) surrounds the cavity (5) along the longitudinal direction of the hollow profiles (4) at all sides of the wood fibre insulation material (6), and/or
wherein inner wall surfaces (7a) of said walls (7) provides said cavity (5), wherein the cavity (5) has a cross sectional shape of a polygon.

11. Building aperture window (1) according to any of the preceding claims, wherein the wood fibre insulation material comprises a wood fibre mat, such as a rolled up, folded and/or compressed wood fibre mat.

12. Building aperture window (1) according to any of the preceding claims, wherein the one or more hollow profiles of the frame (3) is/are a multi-cavity hollow profile comprising a plurality of cavities (5) comprising the wood fibre insulation material (5), such as wherein said cavities are arranged along and opposite to an outer major surface of the insulated glass unit (2).

13. Building aperture window (1) according to any of the preceding claims, wherein the one or more hollow profiles (4) of the frame (3) is a multi-cavity hollow profile comprising a plurality of elongated cavities (5) extending parallel to each other in the longitudinal direction of the respective multi-cavity hollow profile (4), wherein said multi-cavity hollow profile comprises a main cavity having a cross section that is at least 50%, such as at least 100%, e.g. at least 200% larger than each of the remaining cavities of the profile, and wherein at least the main cavity is filled with said wood fibre insulation material.

14. Building aperture window (1) according to any of the preceding claims, wherein the wood fibre insulation material is a thermally treated wood fibre insulation material.

15. Method of filling a cavity (5) of one or more building aperture window (1) frame hollow profiles (4) with a wood fibre insulation material (6) by means of a filling system (200), wherein the filling system (200) comprises
- an insulation storage (220) containing loose wood fibre insulation material (6),
- a dispensing system (210) comprising a blowing or suction unit (211), and an outlet nozzle (230) for dispensing the wood fibre insulation material (6) from the insulation storage (220),
wherein the method comprises the steps of:
providing one or more elongated, hollow window frame profiles (4) comprising walls (7) of a polymer material, and wherein the one or more hollow profiles (4) comprises at least one elongated cavity (5) extending in the longitudinal direction of the one or more hollow profiles,
placing the outlet nozzle (230) at or in the cavity (5) to be filled with the loose wood fibre insulation material through an opening (260) in the one or more hollow profiles (4), and
operating the blowing or suction system (210) so as to supply the wood fibre insulation material (6) from the insulation storage (220) through the outlet nozzle (230) and into the cavity (5), so as to fill the cavity (5) with the wood fibre insulation material.

## Patentansprüche

1. Gebäudeöffnungsfenster (1), wobei das Gebäudeöffnungsfenster (1) eine in einem Rahmen (3) angeordnete Isolierglaseinheit (2) umfasst,
wobei der Rahmen (3) ein oder mehrere Hohlprofile (4) umfasst, die Wände (7) aus einem Polymermaterial umfassen, und wobei das eine oder die mehreren Hohlprofile (4) einen oder mehrere Hohlräume (5) mit einem Holzfaserisoliermaterial (6) umfassen,
wobei das Holzfaserisoliermaterial (6) einen Wärmeleitfähigkeitskoeffizienten (λᵢₘ) unter 0,06 W/(m·K), wie etwa unter 0,05 W/(m·K), wie etwa unter 0,04 W/(m·K), aufweist, wobei das Holzfaserisoliermaterial (6) mindestens 10 Gew.-% Lignin umfasst und
wobei das Polymermaterial aus einem oder mehreren von CPVC (chloriertes Polyvinylchlorid), PVC (Polyvinylchlorid) und PP (Polypropylen) ausgewählt ist.

2. Gebäudeöffnungsfenster (1) nach einem der vorhergehenden Ansprüche, wobei das Holzfaserisoliermaterial (6) in dem einen oder den mehreren Hohlräumen (5) eine Dichte zwischen 15 kg/m³ und 100 kg/m³, wie etwa zwischen 20 kg/m³ und 80 kg/m³, wie etwa zwischen 30 kg/m³ und 60 kg/m³ oder zwischen 20 kg/m³ und 60 kg/m³ (beide Endpunkte eingeschlossen) aufweist.

3. Gebäudeöffnungsfenster (1) nach einem der vorhergehenden Ansprüche, wobei das Holzfaserisoliermaterial (6) lose Holzfasern (6a) umfasst, wie etwa im Wesentlichen aus losen Holzfasern (6a) besteht.

4. Gebäudeöffnungsfenster (1) nach einem der vorhergehenden Ansprüche, wobei das Holzfaserisoliermaterial (6) weniger als 60 Gew.-% Zellulose, wie etwa weniger als 55 Gew.-% Zellulose, wie etwa weniger als 50 Gew.-% Zellulose, umfasst.

5. Gebäudeöffnungsfenster (1) nach einem der vorhergehenden Ansprüche, wobei das Holzfaserisoliermaterial (6) mindestens 19 Gew.-% Hemizellulose, wie etwa mindestens 25 Gew.-% Hemizellulose, wie etwa mindestens 30 Gew.-% Hemizellulose, umfasst.

6. Gebäudeöffnungsfenster (1) nach einem der vorhergehenden Ansprüche, wobei das Holzfaserisoliermaterial mindestens 96 Gew.-%, wie etwa mindestens 99 Gew.-%, zum Beispiel mindestens 99,9 Gew.-%, Holzfaserkomponenten umfasst.

7. Gebäudeöffnungsfenster (1) nach einem der vorhergehenden Ansprüche, wobei das Holzfaserisoliermaterial (6) längliche Holzfaserkomponenten mit einer Dicke (CW) zwischen 5 um und 100 um, wie etwa zwischen 10 um und 50 um, wie etwa zwischen 15 um und 50 um, umfasst.

8. Gebäudeöffnungsfenster (1) nach einem der vorhergehenden Ansprüche, wobei das Holzfaserisoliermaterial längliche Holzfaserbauteile mit einer Länge a zwischen 1 mm und 8 cm, wie etwa zwischen 5 mm und 5 cm, zum Beispiel zwischen 8 mm und 3 cm, umfasst.

9. Gebäudeöffnungsfenster (1) nach einem der vorhergehenden Ansprüche, wobei mindestens 5 %, wie etwa mindestens 10 %, wie etwa mindestens 40 % der Holzfaserkomponenten (6a) des Holzfaserisoliermaterials (6) mit anderen Holzfaserkomponenten (6a) des Holzfaserisoliermaterials (6) zu verklumpten Teilen (CP) verklumpt sind.

10. Gebäudeöffnungsfenster (1) nach einem der vorhergehenden Ansprüche, wobei die Wände (7) den Hohlraum (5) entlang der Längsrichtung der Hohlprofile (4) an allen Seiten des Holzfaserisoliermaterials (6) umgeben
und/oder
wobei Innenwandflächen (7a) der Wände (7) den Hohlraum (5) bereitstellen, wobei der Hohlraum (5) eine Querschnittsform eines Polygons aufweist.

11. Gebäudeöffnungsfenster (1) nach einem der vorhergehenden Ansprüche, wobei das Holzfaserisoliermaterial eine Holzfasermatte, wie etwa eine aufgerollte, gefaltete und/oder komprimierte Holzfasermatte, umfasst.

12. Gebäudeöffnungsfenster (1) nach einem der vorhergehenden Ansprüche, wobei das eine oder die mehreren Hohlprofile des Rahmens (3) ein Hohlprofil mit mehreren Hohlräumen sind, das eine Vielzahl von Hohlräumen (5) umfasst, die das Holzfaserisoliermaterial (5) umfasst, wie etwa wobei die Hohlräume entlang und gegenüber einer Hauptaußenfläche der Isolierglaseinheit (2) angeordnet sind.

13. Gebäudeöffnungsfenster (1) nach einem der vorhergehenden Ansprüche, wobei das eine oder die mehreren Hohlprofile (4) des Rahmens (3) ein Hohlprofil mit mehreren Hohlräumen sind, das eine Vielzahl von länglichen Hohlräumen (5) umfasst, die sich parallel zueinander in der Längsrichtung des jeweiligen Hohlprofils (4) mit mehreren Hohlräumen erstreckt, wobei das Hohlprofil mit mehreren Hohlräumen einen Haupthohlraum mit einem Querschnitt umfasst, der mindestens 50 %, wie etwa mindestens 100 %, z. B. mindestens 200%, größer ist als jeder der übrigen Hohlräume des Profils, und wobei mindestens der Haupthohlraum mit dem Holzfaserisoliermaterial gefüllt ist.

14. Gebäudeöffnungsfenster (1) nach einem der vorhergehenden Ansprüche, wobei das Holzfaserisoliermaterial ein thermisch behandeltes Holzfaserisoliermaterial ist.

15. Verfahren zum Füllen eines Hohlraums (5) eines oder mehrerer Rahmenhohlprofile (4) eines Gebäudeöffnungsfensters (1) mit einem Holzfaserisoliermaterial (6) durch ein Füllsystem (200), wobei das Füllsystem (200) Folgendes umfasst:
einen Isolierungsvorrat (220), der loses Holzfaserisoliermaterial (6) enthält,
ein Abgabesystem (210), das eine Blas- oder Saugeinheit (211) und eine Auslassdüse (230) zum Abgeben des Holzfaserisoliermaterials (6) aus dem Isolierungsvorrat (220) umfasst,
wobei das Verfahren die folgenden Schritte umfasst:
Bereitstellen eines oder mehrerer länglichen, hohlen Fensterrahmenprofile (4), die Wände (7) aus einem Polymermaterial umfassen, und wobei das eine oder die mehreren Hohlprofile (4) mindestens einen länglichen Hohlraum (5) umfassen, der sich in der Längsrichtung des einen oder der mehreren Hohlprofile erstreckt,
Platzieren der Auslassdüse (230) an oder in dem Hohlraum (5), der mit dem losen Holzfaserisoliermaterial durch eine Öffnung (260) in dem einen oder den mehreren Hohlprofilen (4) zu füllen ist, und
Betreiben des Blas- oder Saugsystems (210), um das Holzfaserisoliermaterial (6) aus dem Isolierungsvorrat (220) durch die Auslassdüse (230) und in den Hohlraum (5) zuzuführen, sodass der Hohlraum (5) mit dem Holzfaserisoliermaterial gefüllt wird.

## Revendications

1. Fenêtre d'ouverture de bâtiment (1), dans laquelle la fenêtre d'ouverture de bâtiment (1) comprend une unité de verre isolant (2) agencée dans un cadre (3),
dans laquelle le cadre (3) comprend un ou plusieurs profilés creux (4) comprenant des parois (7) en matériau polymère, et dans laquelle l'un ou les plusieurs profilés creux (4) comprennent une ou plusieurs cavités (5) avec un matériau isolant en fibres de bois (6),
dans laquelle le matériau isolant en fibres de bois (6) présente un coefficient de conductivité thermique (λᵢₘ) inférieur à 0,06 W/(m·K), par exemple inférieur à 0,05 W/(m·K), par exemple inférieur à 0,04 W/(m·K),
dans laquelle le matériau isolant en fibres de bois (6) comprend au moins 10 % en poids de lignine, et
dans laquelle ledit matériau polymère est choisi parmi un ou plusieurs parmi le CPVC (chlorure de polyvinyle chloré), le PVC (chlorure de polyvinyle) et le PP (polypropylène).

2. Fenêtre d'ouverture de bâtiment (1) selon l'une quelconque des revendications précédentes, dans laquelle le matériau isolant en fibres de bois (6) dans l'une ou les plusieurs cavités (5) présente une masse volumique comprise entre 15 kg/m³ et 100 kg/m³, par exemple entre 20 kg/m³ et 80 kg/m³, par exemple entre 30 kg/m³ et 60 kg/m³ ou entre 20 kg/m³ et 60 kg/m³ (les deux extrémités étant incluses).

3. Fenêtre d'ouverture de bâtiment (1) selon l'une quelconque des revendications précédentes, dans laquelle le matériau isolant en fibres de bois (6) comprend des fibres de bois en vrac (6a), de manière à être sensiblement constitué de fibres de bois en vrac (6a).

4. Fenêtre d'ouverture de bâtiment (1) selon l'une quelconque des revendications précédentes, dans laquelle le matériau isolant en fibres de bois (6) comprend moins de 60 % en poids de cellulose, par exemple moins de 55 % en poids de cellulose, par exemple moins de 50 % en poids de cellulose.

5. Fenêtre d'ouverture de bâtiment (1) selon l'une quelconque des revendications précédentes, dans laquelle le matériau isolant en fibres de bois (6) comprend au moins 19 % en poids d'hémicellulose, par exemple au moins 25 % en poids d'hémicel-lulose, par exemple au moins 30 % en poids d'hémicellulose.

6. Fenêtre d'ouverture de bâtiment (1) selon l'une quelconque des revendications précédentes, dans laquelle le matériau isolant en fibres de bois comprend au moins 96 % en poids, par exemple au moins 99 % en poids, par exemple au moins 99,9 % en poids de composants en fibres de bois.

7. Fenêtre d'ouverture de bâtiment (1) selon l'une quelconque des revendications précédentes, dans laquelle le matériau isolant en fibres de bois (6) comprend des composants en fibres de bois allongés présentant une épaisseur (CW) comprise entre 5 µm et 100 µm, par exemple entre 10 µm et 50 µm, par exemple entre 15 µm et 50 µm.

8. Fenêtre d'ouverture de bâtiment (1) selon l'une quelconque des revendications précédentes, dans laquelle le matériau isolant en fibres de bois comprend des composants en fibres de bois allongés présentant une longueur comprise entre 1 mm et 8 cm, par exemple entre 5 mm et 5 cm, par exemple entre 8 mm et 3 cm.

9. Fenêtre d'ouverture de bâtiment (1) selon l'une quelconque des revendications précédentes, dans laquelle au moins 5 %, par exemple au moins 10 %, par exemple au moins 40 % des composants en fibres de bois (6a) du matériau isolant en fibres de bois (6) sont regroupés au niveau des parties regroupées (CP) avec d'autres composants en fibres de bois (6a) du matériau isolant en fibres de bois 6.

10. Fenêtre d'ouverture de bâtiment (1) selon l'une quelconque des revendications précédentes, dans laquelle les parois (7) entourent la cavité (5) le long de la direction longitudinale des profilés creux (4) de tous les côtés du matériau isolant en fibres de bois (6),
et/ou
dans laquelle les surfaces de paroi intérieures (7a) desdites parois (7) fournissent ladite cavité (5), dans laquelle la cavité (5) présente une forme en coupe transversale d'un polygone.

11. Fenêtre d'ouverture de bâtiment (1) selon l'une quelconque des revendications précédentes, dans laquelle le matériau isolant en fibres de bois comprend un tapis en fibres de bois, par exemple un tapis en fibres de bois enroulé, plié et/ou compressé.

12. Fenêtre d'ouverture de bâtiment (1) selon l'une quelconque des revendications précédentes, dans laquelle l'un ou les plusieurs profilés creux du cadre (3) sont des profilés creux à cavités multiples comprenant une pluralité de cavités (5) comprenant le matériau isolant en fibres de bois (5), de sorte que lesdites cavités sont agencées le long et en face d'une surface principale extérieure de l'unité de verre isolant (2).

13. Fenêtre d'ouverture de bâtiment (1) selon l'une quelconque des revendications précédentes, dans laquelle l'un ou les plusieurs profilés creux (4) du cadre (3) sont des profilés creux à cavités multiples comprenant une pluralité de cavités allongées (5) se prolongeant parallèlement les unes aux autres dans la direction longitudinale des profilés creux (4) à cavités multiples respectifs, dans laquelle lesdits profilés creux à cavités multiples comprennent une cavité principale présentant une section transversale qui est au moins 50 %, par exemple au moins 100 %, par exemple au moins 200 % plus grande que chacune des cavités restantes des profilés, et dans laquelle au moins la cavité principale est remplie dudit matériau isolant en fibres de bois.

14. Fenêtre d'ouverture de bâtiment (1) selon l'une quelconque des revendications précédentes, dans laquelle le matériau isolant en fibres de bois est un matériau isolant en fibres de bois traité thermiquement.

15. Procédé de remplissage d'une cavité (5) d'un ou de plusieurs profilés creux (4) de cadre de fenêtre d'ouverture de bâtiment (1) avec un matériau isolant en fibres de bois (6) au moyen d'un système de remplissage (200), dans lequel le système de remplissage (200) comprend
- un stockage d'isolation (220) contenant un matériau isolant en fibres de bois en vrac (6),
- un système de distribution (210) comprenant une unité de soufflage ou d'aspiration (211) et une buse de sortie (230) pour distribuer le matériau isolant en fibres de bois (6) à partir du stockage d'isolation (220),
dans lequel le procédé comprend les étapes suivantes :
la fourniture d'un ou de plusieurs profilés (4) de cadre de fenêtre creux et allongés comprenant des parois (7) en matériau polymère, et dans lequel l'un ou les plusieurs profilés creux (4) comprennent au moins une cavité allongée (5) se prolongeant dans la direction longitudinale de l'un ou des plusieurs profilés creux,
le placement de la buse de sortie (230) au niveau ou dans la cavité (5) à remplir avec le matériau isolant en fibres de bois en vrac à travers une ouverture (260) dans l'un ou les plusieurs profilés creux (4), et
le fait de faire fonctionner le système de soufflage ou d'aspiration (210) de manière à alimenter le matériau isolant en fibres de bois (6) depuis le stockage d'isolation (220) à travers la buse de sortie (230) et dans la cavité (5), de manière à remplir la cavité (5) avec le matériau isolant en fibres de bois.
